# EUROPÄISCHE PATENTSCHRIFT

(11) **EP 0 589 288 B1**
(45) Veröffentlichungstag und Bekanntmachung des Hinweises auf die Patenterteilung: **05.12.2001**
(21) Anmeldenummer: 93114445.5
(22) Anmeldetag: 08.09.1993
(51) Int. Cl.: H04Q 11/04, H04L 12/56, H04J 3/24

(54) **Verfahren zum Multiplexen von virtuellen Kanälen auf eine Übertragungsleitung**
Method for multiplexing virtual channels on a transmission line
Procédé de multiplexage de canaux virtuels sur une ligne de transmission

(30) Priorität: 23.09.1992 DE 4231860
(43) Veröffentlichungstag der Anmeldung: 30.03.1994
(73) Patentinhaber: SIEMENS AKTIENGESELLSCHAFT, 80333 München (DE)
(72) Erfinder: Voigt, Jens, Dipl.-Ing., D-81673 München (DE); Hofschen, Stefan, Ing., D-47475 Kamp Lintfort (DE)

(56) Entgegenhaltungen:
- EP-A- 0 422 549
- EP-A- 0 473 330
- YASUSHI TAKAGI ET AL: "PRIORITY ASSIGNMENT CONTROL OF ATM LINE BUFFERS WITH MULTIPLE QOS CLASSES" IEEE JOURNAL ON SELECTED AREAS IN COMMUNICATIONS, Bd. 9, Nr. 7, 1.September 1991, Seiten 1078-1092, XP000272781

## Beschreibung

In Informationen vermittelnden Systemen, z.B. paketvermittelnden Systemen, besteht an verschiedenen Stellen, z.B. Vermittungsrechnern, Servern usw., die Aufgabe, die für mehrere Empfänger bestimmten Zellströme auf eine einzelne Übertragungsleitung zeitlich zu verschränken oder zu multiplexen. Die Zellen werden auf der Übertragungsleitung transportiert und später an Verteilknoten wieder in für einzelne Empfänger bestimmte Zellströme aufgespaltet. Für das Multiplexen gibt es dabei folgende Randbedingungen:
- die Empfänger besitzen unterschiedliche Empfangsdatenraten. Da die Datenrate auf der Übertragungsleitung, im folgenden Gesamtdatenrate genannt, konstant ist, müssen bereits beim Multiplexen der Zellströme die unterschiedlichen Datenraten der Empfänger in Form unterschiedlich langer Zeitabstände zwischen zwei für den gleichen Empfänger bestimmten Zellen berücksichtigt werden.
- Das Multiplexen ist unter Echtzeitbedingungen auszuführen.

Aus dem europäischen Patent EP 0 422 549 B1 ist eine Vorrichtung zum Multiplexen von über mehrere virtuelle Kanäle zu übertragenden Zellen auf einen gemeinsamen Übertragungskanal bekannt. Hierbei werden ankommende Zellen von einer Multiplexsteuerung in einen Zellenspeicher gelenkt, der für jede virtuelle Verbindung einen individuellen Pufferspeicher enthält. Zudem werden Zellentakte gebildet, die entsprechend den aufeinanderfolgenden Zeitintervallen, während denen die ausgehenden Zellen auf den Übertragungskanal ausgesendet werden, zyklisch numeriert sind. Jedem Zellentakt ist eine individuelle Zellentakt-Warteschlange zugeordnet, in die für jede ankommende Zelle Angaben, die jeweils den zugehörigen virtuellen Kanal identifizieren, eingetragen werden. Der jeweilige Inhalt der Zellentakt-Warteschlangen wird zyklisch in eine Sendewarteschlange übertragen. Diese übertragenen Angaben werden anschließend der Reihe nach verwendet, um aus den Pufferspeichen der virtuellen Kanäle, zu denen sie gehören, je eine Zelle auszulesen und auf den Übertragungskanal auszusenden. Eine Regulierung des Durchsatzes eines gegebenen virtuellen Kanals wird erreicht, indem aufeinanderfolgende Zellen eines virtuellen Kanals unter Beachtung eines vorbestimmten Intervalls ausgesendet werden. Hierzu werden für je zwei aufeinanderfolgende Zellen die Angaben zur Identifizierung des virtuellen Kanals in zwei Zellentakt-Warteschlangen eingetragen, die mindestens einen Abstand gemäß dem bestimmten Intervall besitzen, wobei dieser Abstand durch die zyklische Numerierung der Zellentakt-Warteschlangen und durch die zyklische Übertragung der Zellentakt-Warteschlangen in die Sendewarteschlange bestimmt ist.

Im folgenden wird statt von Empfängern von virtuellen Kanälen gesprochen. Dabei kann es sich um permanente oder semipermanente virtuelle Kanäle, d.h. die virtuelen Kanäle werden nicht für jeden Datentransfer aufgebaut, handeln. Die Übertragung in den virtuellen Kanälen findet in Zellen von konstanter Größe statt. Jedem virtuellen Kanal wird bei der Einrichtung eine maximale Bandbreite (Datenrate) zugeteilt. In einer ATM-Vermittlung findet dann entsprechend für jeden virtuellen Kanal eine Bandbreitenüberwachung statt. Wenn die Datenrate eines virtuellen Kanals die zulässige Bandbreite überschreitet, werden die Zellen dieses virtuellen Kanals verworfen. Es muß daher eine Begrenzung der Bandbreite für jeden virtuellen Kanal erfolgen, um den Verlust von Zellen zu verhindern.

Das der Erfindung zugrundeliegende Problem besteht darin, ein Verfahren anzugeben, bei dem keine Bandbreitenüberwachung beim Versenden in der Vermittlung mehr erforderlich ist und trotzdem die Zellen einwandfrei auf die Übertragungsleitung gemultiplext werden. Diese Aufgabe wird gemäß den Merkmalen des Patentanspruchs 1 gelöst.

Es ist vorteilhaft wenn die Zellen so auf einen Ausgangszellenstrom auf der Übertragungsleitung verteilt werden, daß keine Konfliktfälle entstehen können, d. h. einem Eintrag werden nicht mehr als ein virtueller Kanal zugeordnet.

Sollte trotzdem ein Konfliktfall auftreten, dann werden die einem Eintrag der Verteiltabelle zugeordneten virtuellen Kanäle nacheinander abgearbeitet, bevor zum nächsten Eintrag in der Verteiltabelle übergegangen wird. Es ist weiterhin zweckmäßig, jedem virtuellen Kanal einen Pufferspeicher, einen FIFO-Speicher, zuzuordnen, um dort Zellen zwischenspeichern zu können.

Andere Weiterbildungen der Erfindung ergeben sich aus den Unteransprüchen. Es zeigen
Figur 1 eine Prinzipdarstellung zur Erläuterung des Verfahrens,
Figur 2 eine Tabelle zur Erläuterung der Zuordnung von Kanälen zu Einträgen,
Figur 3 eine Darstellung einer Anlage, mit der das Verfahren durchgeführt werden kann,
Figur 4 das Verfahren in einem Flußdiagramm.

Die im folgenden verwendeten Begriffe sollen folgende Bedeutung haben.
Zelle: Informationseinheit fester Länge, die aus einer Headerinformation, z.B. der Routing-Adresse, und einem Nutzlastanteil besteht. Zur besseren Abgrenzung gegenüber den Leerzellen werden diese Zellen auch als Nutzzellen bezeichnet.
Leerzelle: In paketvermitttelnden Systemen beinhalten nicht alle Zellen auch tatsächlich eine bestimmte Information für einen virtuellen Kanal. Der Zustand, daß keine Informationen zu übertragen sind, wird durch Leerzellen repräsentiert.

Ausgangszellstrom: Ein Zellstrom ist eine kontinuierliche Abfolge von Nutz- und Leerzellen. Der Ausgangszellstrom ist deshalb der auf der Übertragungsleitung übertragene Zellstrom.
Datenrate: Jeder Empfänger oder Sender, im folgenden virtueller Kanal genannt, kann Daten mit einer bestimmten Datenrate empfangen oder aussenden. In Netzen, auf denen Daten in Form eines Zellstroms übertragen werden, ist jedoch die Übertragungsrate konstant. Diese Übertragungsrate der Übertragungsleitung wird Gesamtdatenrate genannt.

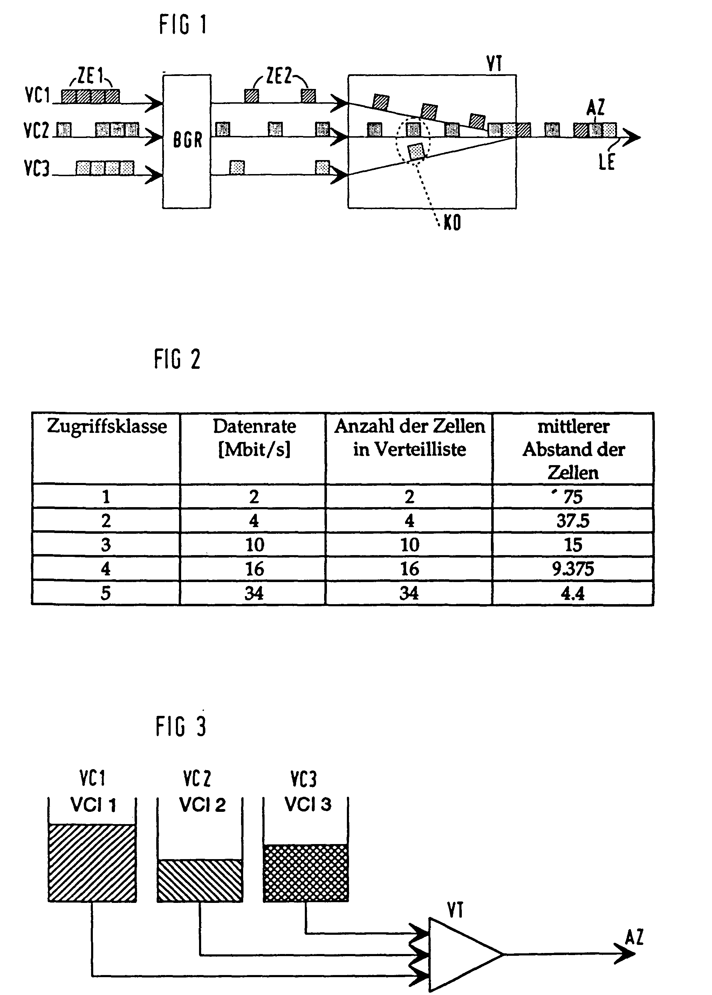

Anhand von Figur 1 werden diese Verhältnisse weiter erläutert. Hier sind virtuelle Kanäle mit VC bezeichnet. Über drei virtuelle Kanäle VC1, VC2 und VC3 werden Zellen ZE übertragen. Die einzelnen Zellen ZE, die ebenfalls einen Zellenstrom bilden, sollen nun auf eine Übertragungsleitung LE gemultiplext werden. Auf der Übertragungsleitung LE fließt dann der Ausgangszellstrom AZ. Der zeitliche Abstand der Zellen, d.h. der sog. Zellentakt auf der Übertragungsleitung LE, wird durch dessen Gesamtdatenrate festgelegt (z.B. 2,7 mikrosec. für eine Gesamtdatenrate von 150 Megabit pro Sekunde). Die Zellen der einzelnen virtuellen parallelen Kanäle VC müssen auf diesen sequentiellen Ausgangzellstrom AZ gemultiplext werden. Dazu dient ein Verteiler VT. Dabei kann es auftreten, wie es in Figur 1 mit KO bezeichnet ist, daß zu einem Zeitpunkt die Zellen von mehreren virtuellen Kanälen übertragen werden müßten, um die Datenrate jedes einzelnen virtuellen Kanals VC zu erreichen; es tritt also eine Kollision auf. Um dies zu vermeiden, wird in einer Bandbreitenbegrenzungsschaltung BGR dafür gesorgt, daß die Zellen eines virtuellen Kanals nach der Bandbreitenbegrenzungsschaltung möglichst gleichmäßig auf den Ausgangsdatenstrom verteilt und so gegen die Zellen der anderen virtuellen Kanäle verschoben sind, daß ein derartiger Kollisionsfall nicht auftreten kann. Dies zeigt Fig. 1: die Zellen ZE1 auf den einzelnen virtuellen Kanälen VC werden durch die Bandbreitenbegrenzungsschaltung BGR so aufgeteilt (Zellen ZE2), daß durch geschickte Verschiebung der Zellen gegenüber den Zellen der anderen virtuellen Kanäle eine Kollision KO nicht mehr auftreten kann.

Zentraler Bestandteil des Verfahrens ist eine sog. statische Verteiltabelle, in der der Ausgangsdatenstrom AZ nachgebildet ist. Die Verteiltabelle enthält Einträge, die angeben, über welchen virtuellen Kanal VC eine Zelle ZE geschickt werden darf.

Die Bandbreitenbegrenzung entspricht einem gleichmäßigen Aufteilen der Zellen auf den Datenstrom. Höhere Datenraten entsprechen dabei geringeren mittleren Abständen der Zellen. Die Länge der Verteiltabelle ist angepaßt an die Gesamtdatenrate der Übertragungsleitung. Ist z. B. die Gesamtdatenraten 150 Megabit pro Sekunde, dann hat die Verteiltabelle 150 Einträge, wenn die kleinste Datenrate 1 Megabit pro Sekunde ist. Die Anzahl der Einträge für einen virtuellen Kanal VC in der Verteiltabelle entspricht dann der Datenrate dieses virtuellen Kanals.

Diese Verhältnisse ergeben sich auch aus der Figur 2. Hier sind Zugriffsklassen für die virtuellen Kanäle gebildet. Die Zugriffsklasse ist dabei in der ersten Spalte dargestellt. Für jede Zugriffsklasse, bzw. jeden virtuellen Kanal, ist in Spalte 2 die Datenrate in Megabit pro Sekunde angegeben. Die Spalte 3 zeigt dann die Anzahl der Zellen (Einträge) in der Verteiltabelle; aus der Spalte 4 ergibt sich der mittlere Abstand der Zellen in der Verteiltabelle. Wenn z.B. die Zugriffsklasse 1 gewählt wird, bei der der virtuelle Kanal mit einer Datenrate von 2 Megabit pro Sekunde arbeitet, sind in der Verteiltabelle bei 150 Einträgen zwei Einträge diesem virtuellen Kanal zugeordnet. Der mittlere Abstand der beiden Zellen beträgt dann 75. Entsprechendes gilt auch für die übrigen virtuellen Kanäle, die anderen Zugriffsklassen zugeordnet sind. In der Verteiltabelle kann z.B.der erste Eintrag einem virtuellen Kanal der Zugriffsklasse 1 zugeordnet werden, dann wird der 75. Eintrag der Verteiltabelle ebenfalls diesem virtuellen Kanal zugeordnet. Entsprechend kann dem zweiten Eintrag der Verteiltabelle der virtuelle Kanal mit der Zugriffsklasse 2 zugeordnet werden. Diesem virtuellen Kanal werden dann noch vier Einträge in der Verteiltabelle zugeordnet, die den Abstand von z.B. 37 oder 38 haben. Entsprechend können für die anderen virtuellen Kanäle mit den übrigen Zugriffsklassen Einträge in der Verteiltabelle zugeordnet werden. Dabei werden die Zellen so aufgeteilt, daß die Zellen eines virtuellen Kanals möglichst gleichmäßig auf den Ausgangszellstrom verteilt werden und gegenüber den Zellen andere Kanäle so verschoben, daß keine Kollisionen auftreten. Wenn die virtuellen Kanäle, die zur Verfügung stehende Gesamtdatenrate nicht ausnutzen, enthält die Verteiltabelle auch Einträge, die auf keinen Kanal verweisen.

Diese Verteiltabelle wird nun im Betrieb zyklisch im Zellentakt abgearbeitet. Wenn eine Zelle für einen virtuellen Kanal vorliegt, der in der Verteiltabelle steht, wird diese Zelle übertragen. Wenn keine Zelle vorliegt, wird bis zum nächsten Zellentakt gewartet und dann der nächste Eintrag der Verteiltabelle bearbeitet. Dies ergibt sich aus Figur 3. Dort ist ein Beispiel dargestellt, in dem die sendebereiten Zellen VC eines virtuellen Kanals VC in einem FIFO-Speicher zwischengespeichert werden. Der Verteiler VT erzeugt dann mit Hilfe der Verteiltabelle den Ausgangszellstrom AZ.

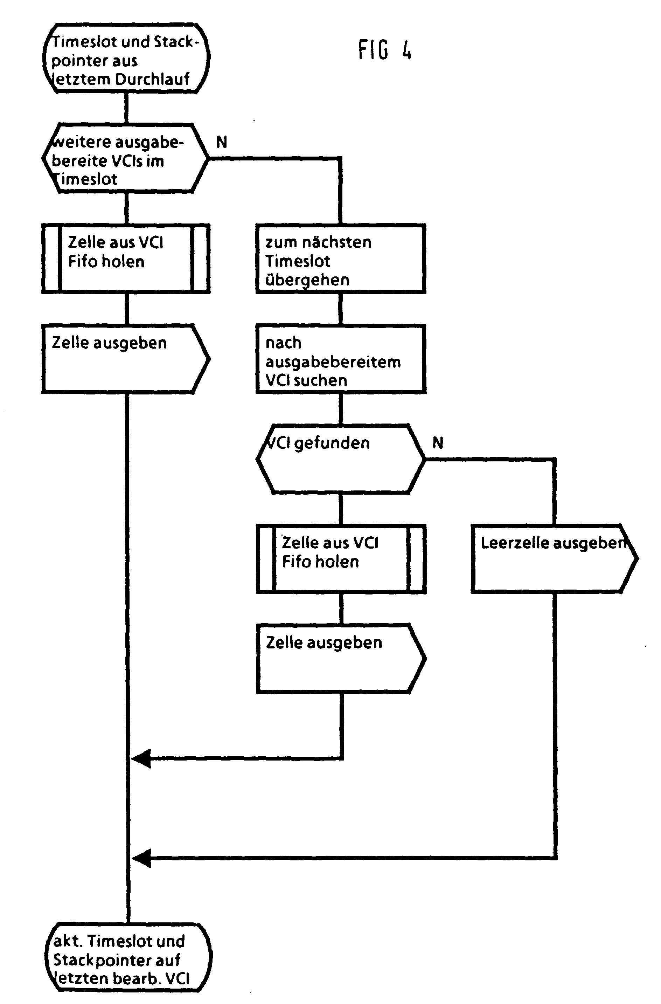

Das Verfahren wird noch einmal mit Hilfe des Diagramms der Figur 4 erläutert. Im Schritt 1 wird z.B. vom Verteiler VT in der Verteiltabelle festgestellt, daß ein Eintrag für den virtuellen Kanal VC vorliegt. Im Schritt 2 wird untersucht, ob diesem Eintrag nur ein einziger Kanal zugeordnet ist oder nicht. Sollte bei Schritt 2 festgestellt werden, daß einem Eintrag der Verteiltabelle z.B. zwei virtuelle Kanäle zugeordnet sind, dann werden für die virtuellen Kanale die Schritte 3 und 4 durchgeführt und die entsprechende Zelle auf die Übertragungsleitung gegeben. Wird dagegen in Schritt 2 festgestellt, daß kein weiterer virtueller Kanal diesem Eintrag zugeordnet ist, dann wird mit Schritt 5 weitergefahren. Es wird zum nächsten Eintrag der Verteiltabelle übergegangen, der zugeordnete virtuelle Kanal ermittelt und im zugeordneten FIFO festgestellt, ob eine Zelle ausgegeben werden kann oder nicht. Wenn keine Zelle ausgegeben werden kann, dies wird im Schritt 7 untersucht, dann wird eine Leerzelle im Schritt 10 auf die Übertragungsleitung gegeben. Liegt dagegen eine Zelle im FIFO vor, dann wird im Schritt 8 diese Zelle aus dem FIFO geholt und im Schritt 9 ausgegeben. Alle Zweige des Diagramms führen zum Schritt 11, durch den festgelegt wird, daß der aktuelle Eintrag und der Zeiger auf den letzten bearbeiteten FIFO bzw. VCI beibehalten wird. Ein Wechsel zum nächsten Eintrag in der Verteiltabelle erfolgt nur gemäß Schritt 5, wenn festgestellt worden ist (im Schritt 2), daß einem gerade bearbeiteten Eintrag kein weiterer virtueller Kanal zugeordnet worden ist.

Der Vorteil des erfindungsgemäßen Verfahrens liegt insbesondere darin, daß das Problem der Bandbreitenbegrenzung gelöst ist und zwar durch dieAufteilung der Zellen der virtuellen Kanäle (z.B. entsprechend der Figur 2)auf den Ausgangszellenstrom. Weiterhin wird das Multiplexen der Zellen der virtuellen Kanäle auf den Ausgangszellstrom auf einfache Weise festgelegt. Dabei wird sichergestellt, daß die Datenrate der einzelnen virtuellen Kanäle nicht überschritten wird. Ein weiterer Vorteil liegt darin, daß das Verfahren einfach realisiert werden kann, wobei die Realisierung sowohl in Hardware als auch in Software leicht möglich ist.

## Patentansprüche

1. Verfahren zum Multiplexen von über mehrere jeweils einem Empfänger zugeordneten virtuellen Kanälen (VC) zu übertragenden Zellen (ZE) auf eine Übertragungsleitung,
- bei dem entsprechend der Gesamtdatenrate der Übertragungsleitung (LE) eine Anzahl von Einträgen in einer statischen Verteiltabelle vorgesehen werden,
- bei dem diese Einträge den virtuellen Kanälen (VC) entsprechend deren Datenrate zugeordnet werden,
- bei dem die Verteiltabelle zyklisch im Zellentakt abgearbeitet wird und dabei entsprechend dem Eintrag in der Verteiltabelle der virtuelle Kanal ausgewählt wird, der eine Zelle auf die Übertragungsleitung sendet.

## Claims

1. Method for multiplexing cells (ZE) which are to be transmitted via a plurality of virtual channels (VC) each associated with a respective receiver onto a transmission line,
- in which a number of entries are provided in a static distribution table on the basis of the total data rate of the transmission line (LE),
- in which these entries are allocated to the virtual channels (VC) on the basis of the data rate thereof,
- in which the distribution table is processed cyclically with the cell timing, and, in the process the virtual channel which sends a cell to the transmission line is selected on the basis of the entry in the distribution table.

2. Method according to Claim 1,
in which the cells of a virtual channel are distributed such that in each case only one virtual channel is allocated for each entry in the distribution table.

3. Method according to Claim 1,
in which, if a plurality of virtual channels (VC) are allocated to an entry in the distribution table, cells of these virtual channels are transmitted to the transmission line in succession, and only then does processing move on to the next entry in the distribution table.

4. Method according to one of the preceding claims,
in which each virtual channel has an associated FIFO memory which buffer-stores the cells which are to be transmitted via the virtual channel.

## Revendications

1. Procédé permettant le multiplexage, sur une ligne de transmission, de cellules (ZE) à transmettre par l'intermédiaire de plusieurs canaux virtuels (VC) affectés respectivement à un destinataire
- au cours duquel est prévu, en fonction du débit total de données de la ligne de transmission (LE), un nombre d'inscriptions dans un tableau statistique de répartition,
- au cours duquel ces inscriptions sont affectées aux canaux virtuels (VC) en fonction du débit de données,
- au cours duquel le tableau de répartition est traité cycliquement à la cadence des cellules et au cours duquel, dans ce contexte, en fonction de l'inscription dans le tableau de répartition, on choisit le canal virtuel qui émet une cellule sur la ligne de transmission.

2. Procédé selon la revendication 1
au cours duquel les cellules d'un canal virtuel sont distribuées de telle sorte que, pour chaque inscription dans le tableau de répartition, dans chaque cas, un seul canal virtuel est affecté.

3. Procédé selon la revendication 1
au cours duquel, pour le cas où plusieurs canaux virtuels (VC) sont affectés à une inscription dans le tableau de répartition, des cellules de ces canaux virtuels sont transmises l'une après l'autre sur la ligne de transmission et seulement ensuite on passe à l'inscription suivante dans le tableau de répartition.

4. Procédé selon l'une des revendications précédentes
au cours duquel est affectée à chaque canal virtuel une mémoire FIFO (First In First Out ou premier entré premier sorti) dans laquelle les cellules à transmettre par l'intermédiaire du canal virtuel sont mémorisées temporairement.
